(19) **Europäisches Patentamt / European Patent Office / Office européen des brevets**

(11) **EP 2 151 314 B1**

(12) # EUROPEAN PATENT SPECIFICATION

(45) Date of publication and mention
of the grant of the patent:
**27.01.2016 Bulletin 2016/04**

(21) Application number: **08765396.0**

(22) Date of filing: **10.06.2008**

(51) Int Cl.:
*B29D 30/30* *(2006.01)*    *B29D 30/60* *(2006.01)*

(86) International application number:
**PCT/JP2008/060607**

(87) International publication number:
**WO 2008/153022 (18.12.2008 Gazette 2008/51)**

(54) **METHOD FOR PRODUCING A RUBBER MEMBER FOR TIRES AND METHOD FOR PRODUCING A PNEUMATIC TIRE**

VERFAHREN ZUR HERSTELLUNG EINES GUMMIELEMENTS FÜR REIFEN UND VERFAHREN ZUR HERSTELLUNG EINES LUFTREIFENS

PROCÉDÉ DE PRODUCTION D'UN ÉLÉMENT EN CAOUTCHOUC POUR PNEU ET PROCÉDÉ DE FABRICATION D'UN PNEU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.06.2007  JP 2007154252**
**27.08.2007  JP 2007220022**

(43) Date of publication of application:
**10.02.2010 Bulletin 2010/06**

(73) Proprietor: **Sumitomo Rubber Industries, Ltd.**
**Kobe-shi, Hyogo 651-0072 (JP)**

(72) Inventors:
 • **MAFUNE, Toshiyuki**
   **Kobe-shi**
   **Hyogo 651-0072 (JP)**

 • **SAKAMOTO, Masayuki**
   **Kobe-shi**
   **Hyogo 651-0072 (JP)**
 • **NOBUCHIKA, Hideo**
   **Kobe-shi**
   **Hyogo 651-0072 (JP)**

(74) Representative: **Manitz, Finsterwald & Partner GbR**
**Martin-Greif-Strasse 1**
**80336 München (DE)**

(56) References cited:
**EP-A1- 0 561 609      JP-A- H0 825 510**
**JP-A- 11 291 364      JP-A- S56 117 637**
**JP-A- 2003 251 709**

## Description

TECHNICAL FIELD

The present invention relates to a method for producing a rubber member for tires that helps to improve uniformity of the tires and prevent defective molding. The present invention also relates to a method for producing a pneumatic tire.

BACKGROUND OF THE INVENTION

Pneumatic tires are comprised of various rubber members such as tread rubber, sidewall rubber, clinch rubber, cushion rubber, and inner liner rubber. Conventionally, these rubber members are molded by being extruded in predetermined cross sections from, for example, rubber extruders. A drawback is that the method necessitates a nozzle for the rubber extruder on a cross sectional basis and a long period of time for the replacement work.

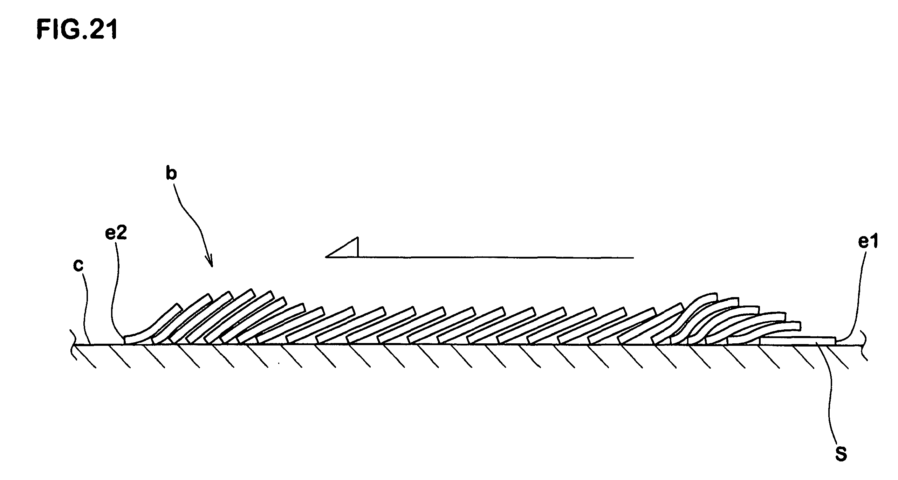

A proposed solution to the drawback is, as shown in Fig. 21, use of a strip wound assembly (b) as a rubber member (see, for example, the following Patent document 1) . The strip wound assembly (b) is formed by spirally winding a ribbon-shaped unvulcanized rubber strip (S) onto a cylindrical object (c). The strip wound assembly (b) shown in Fig. 21 is for the tread rubber.

The strip wound assembly (b) can be easily formed with any desired cross section by, for example, varying the pitch of winding the rubber strip. This eliminates the conventional need for prepari ng various kinds of nozzles and the trouble of replacing them. This method eliminates intermediate stock of the rubber members by, for example, forming the strip wound assembly (b) directly on the peripheries of constituents of the tire, thereby reducing in-process material for rubber members and providing the advantage of further enhancing the production efficiency of tires.

Patent document 1: Japanese unexamined Patent Application Publication No. 2006-51711.
Related technologies are known from JP S56 117637 A, JP H08 25510 A, EP 0 561 609 A1 and JP 11 291364 A.
A method having the features of the preamble of claim 1 is known from IP 2003 251709 A.

DISCLOSURE OF THE INVENTION

PROBLEMS TO BE SOLVED BY THE INVENTION

Incidentally, when a rubber member of a pneumatic tire is molded from the rubber strip (S), the winding count of the rubber strip (S) can be made smaller as the thickness thereof increases. That is, the strip wound assembly (b) can be formed in a shorter period of time, thereby improving the productivity of pneumatic tires.

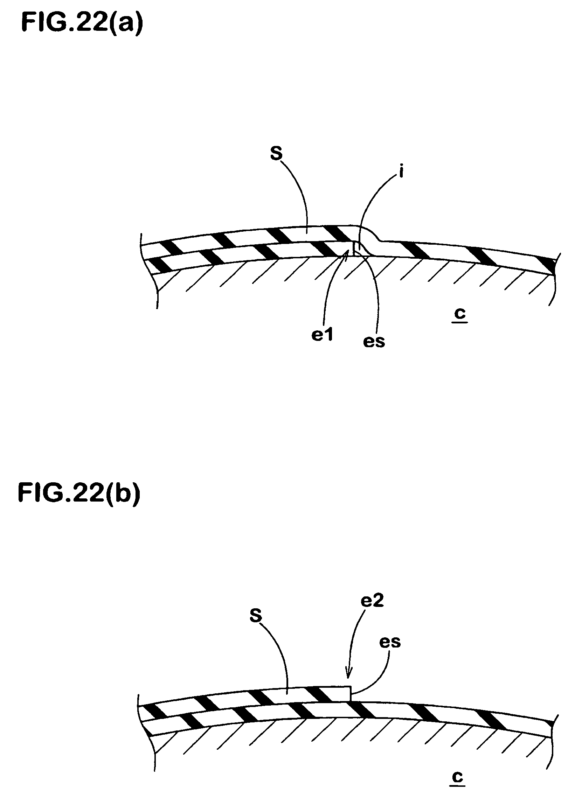

However, as shown in Figs. 22(a) and 22(b), the end surface (es) of each of the longitudinal end portions (e1) and (e2) of the rubber strip (S) is conventionally cut substantially perpendicularly to the longitudinal direction line of the strip. This poses the problem of large steps formed in the thickness di recti on at the end portions (e1) and (e2). A drawback with such a step is, as well as undermining the uniformity of the tire, occurrence of a large air pocket (i) defined by the winding starting end portion (e1), as shown in Fig. 22(a). The air pocket (i) causes defective molding observed on the rubber surface such as damage and swelling after vulcanization.

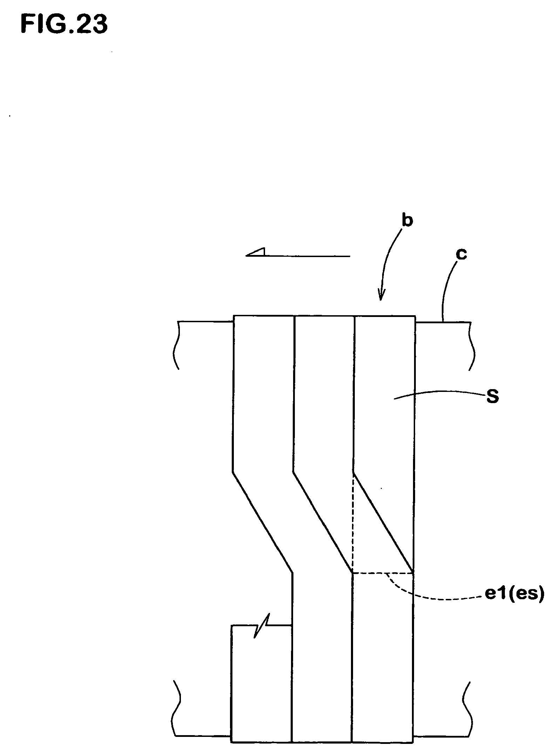

Further, as shown in Fig. 23, air tends to be confined at the end portions (e1) and (e2) since the above-mentioned end surface (es) extends in the width direction, resulting promoting occurrence of the air pocket (i). This makes the circumferential variation of mass and rigidity intense at the end portions (e1) and (e2), thereby causing the problem of promoted degradation of uniformity.

It is an object of the present invention to provide a method for producing a rubber member for tires that is capable of inhibiting defective molding and degraded uniformity of the tires, and a method for producing a pneumatic tire.

MEANS FOR SOLVING THE PROBLEM

A rubber member for tires is formed of a spirally wound unvulcanized rubber strip having a first longitudinal end portion for serving as a starting side of winding of the rubber strip and a second longitudinal end portion for serving as an ending side of the winding. Each end surface of the first end portion and the second end portion has a front end edge extending, in plan view, from one side edge to another side edge of the rubber strip in the width direction thereof. The end surface of at least one of the fi rst end portion and the second end portion is an inclined surface inclining to the longitudinal direction line of the rubber strip.

A method for producing the rubber member for ti res includes the steps of:

attaching the first longitudinal end portion of the rubber strip to an substantially cylindrical object;
spirally winding the rubber strip onto the cylindrical object; and attaching a second longitudinal end portion of the rubber strip to a wound assembly of the rubber strip formed in the winding step. The each end surface of the first end portion and the second end portion has a front end edge extending, in plan view, from one side edge to another side edge of the rubber strip in the width direction thereof. The end surface of at least one of the first end portion and the second end portion is an inclined surface inclining to the longitudinal di recti on line of the rubber strip.

The above object is solved with a method for producing a rubber member for tires having the features of claim 1 or a method for producing a tire having the features of claim 4.

At least one of the first end portion and the second end portion of the rubber strip has an end surface inclining to the longitudinal direction line of the rubber strip. As the above-mentioned inclined surface, an inclined surface which is inclined to reduce the thickness gradually toward a front end edge may be used. In such an inclined surface which thickness changes, this eliminates occurrence of a large step at the end with the inclined surface, thereby improving uniformity. This also prevents occurrence of a large air pocket when the end is covered with asucceedingwound portion of the rubber strip. As a result, defective molding and degraded durability of pneumatic tires are inhibited.

As the above-mentioned inclined surface, an inclined surface in which the front end edge of the inclined surface is inclined to the longitudinal direction line may be adopted. In case of such an inclined surface of the inclining front end edge, this alleviates variation in mass and rigidity in the circumferential direction and thereby improves uniformity. Since the front end edge is inclined, when the end is covered with a succeeding wound portion of the rubber strip, air between portions of the rubber strip is easily discharged outside the rubber member along the front end edge. That is, this makes ai r hard to be confined, thereby preventing occurrence of a large air pocket.

BRIEF DESCRIPTION OF THE DRAWINGS

Fig. 1 is a cross sectional vi ew of a pneumatic tire produced according to the present invention.
Fig. 2 is a pl an view of a rubber strip produced according to an embodiment of the present invention.
Fig. 3 is a perspective view of the rubber strip produced according to the embodiment of the present invention.
Figs. 4(a) and 4(b) are cross sectional views of rubber members each made of a strip wound assembly made using the rubber strip.
Figs. 5(a) and 5(b) are cross sectional views respectively corresponding to the lines A-A and B-B in Fig. 4(b).
Figs. 6(a) and 6(b) are cross sectional views of an inclined surface of the rubber strip.
Fig. 7 is a plan view of another rubber strip produced according to an embodiment of the present invention.
Fig. 8 is a perspective view of another rubber strip produced according to another embodiment of the present invention.
Fig. 9 is a plan view of the rubber strip in a wound state.
Figs. 10(a) and 10(b) are plan views of another rubber strip in a wound state produced according to embodiments of the present invention.
Fig. 11 is a schematic side view of a production apparatus of a rubber member.
Fig. 12 is a perspective view of a cutti ng device used for an embodiment of the present invention.
Fig. 13 is a cross sectional view of the rubber strip cut by the cutting device.
Fig. 14 is a cross sectional view of another cutting device.
Fig. 15 is a perspective view of the ends of the rubber strip in a cut state.
Fig. 16 is a perspective view of a cutting device used for another embodiment of the present invention.
Fig. 17 is a perspective view of the ends of the rubber strip cut by it.
Fig. 18 is a plan view of a rubber strip produced according to still another embodiment of the present invention.
Fig. 19 is a perspective view of the rubber strip according to the still another embodiment of the present invention.
Fig. 20 is a plan view of the rubber strip in a wound state.
Fig. 21 is a cross sectional view of a conventional rubber strip.
Figs. 22(a) and 22(b) are circumferential cross sectional views of the conventional rubber strip showing the ends thereof.
Fig. 23 is a plan view of the conventional rubber strip in a wound state.

EXPLANATION OF REFERENCE NUMERALS

10      front end edge
12      end surface

| 13 | inclined surface |
|---|---|
| 24 | cutting apparatus |
| 24a | cutting device |
| 30 | sharp cutting edge |
| 30b | root portion |
| 31 | pressing portion |
| 31a | pressing face |
| E1, E2 | side edges |
| e1, e2 | end portions |
| Fx | longitudinal direction |
| G | rubber member |
| S | rubber strip |
| Ss | surface |

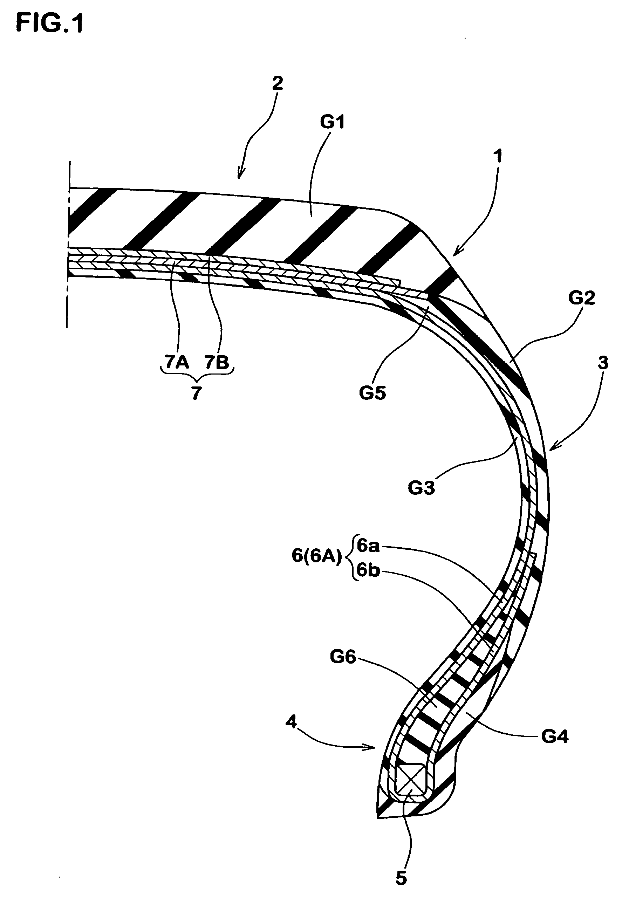

Fig. 1 shows a cross sectional view of a pneumatic tire 1 produced using a rubber member. The pneumatic tire 1 has toroi dal carcasses 6 extending from tread portions 2 through sidewall portions 3 to bead cores 5 in bead portions 4, and a belt 7 arranged at a radially outer side of the carcasses 6.

Each of the carcasses 6 is formed of at least one carcass ply 6A having carcass cords disposed at an angle of, for example, 70 to 90 degrees relative to the circumferential direction of the tire. At an axially outer side of each of main body portions 6a extending from the tread portions 2 through the side wall portions 3 to the bead cores 5 in the bead portions 4, the carcass ply 6A has a turned-up portion 6b extending from the main body portion and turned up from an axially inner side to an axially outer side over the bead core 5. The belt layer 7 is composed of, in this example, two belt plies 7A and 7B having belt cords disposed at an angle of, for example, 10 to 35 degrees relative to the circumferential direction of the tire.

As main rubber members, the pneumatic tire 1 includes a tread rubber (G1) disposed at a radially outer side of the belt layer 7, a side wall rubber (G2) disposed at an axially outer side of the carcass 6 in the side wall portion 3, an inner liner rubber (G3) made of air impermeable rubber and disposed at an axially inner side of the carcass 6, a clinch rubber (G4) disposed at an axially outer side of the carcass in the bead portion 4 and having excellent abrasion resistance, a cushion rubber (G5) disposed at both sides of and at a radially inner side of the belt layer 7 and having an substantially triangle cross section, and a hard bead apex (G6) extending radially outwardly in a tapered manner from the bead core 5.

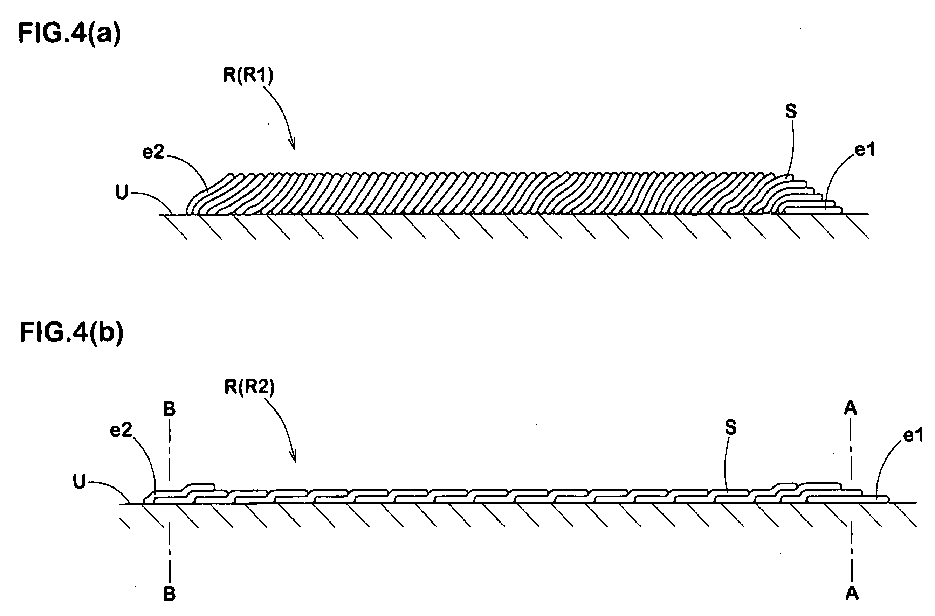

For at least one of the rubber members (G1) to (G6), the pneumatic tire 1 uses a rubber member (R), whi ch, as schematically shown in Figs. 4(a) and 4(b), is a strip wound assembly formed by spirally winding a ribbon-shaped unvulcanized rubber strip (s) onto an substantially cylindrical object (U). Fig. 4(a) exemplifies a rubber member (R1) for the tread rubber (G1), and Fig. 4(b) exemplifies a rubber member (R2) for the sidewall rubber (G2).

The rubber member (R) is produced by a production method including the steps of:

(1) attachi ng a first longitudinal end portion (e1) of a rubber strip (S) to the cylindrical object (u);
(2) spirally winding the rubber strip (S) onto the cylindrical object (U); and
(3) attaching a second longitudinal end portion (e2) of the rubber strip (S) to a wound assembly of the rubber strip formed in the winding step.

The cylindrical object (u) is not particularly specified insofar as it is cylindrical. Examples of the cylindrical object (U) include, as well as a molded drum, the carcass 6 and the belt layer 7, which constitute part of the green tire. That is, the rubber strip (S) may be directly wound onto the periphery of the carcass 6 or the belt layer 7, thus forming the rubber member (R). The attachment of the end portions (e1) and (e2) is secured by the viscosity of the unvulcanized rubber.

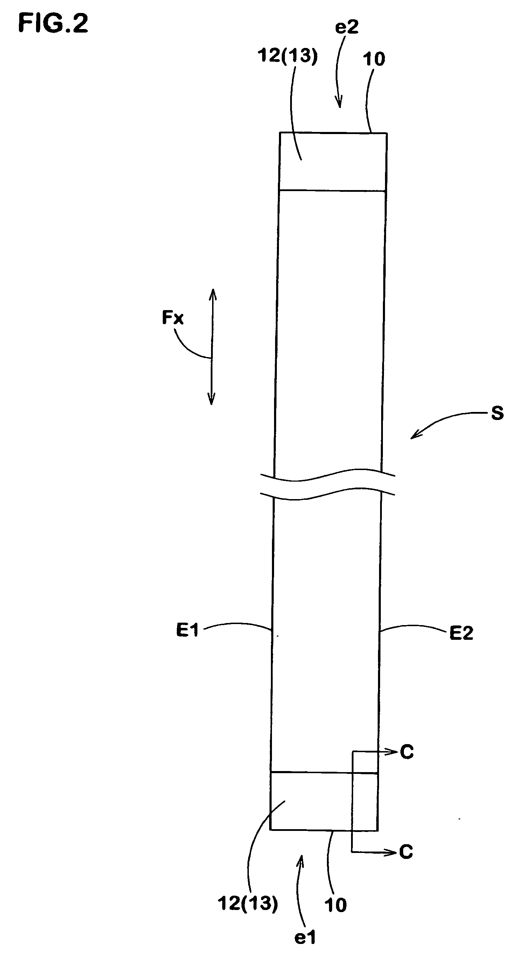

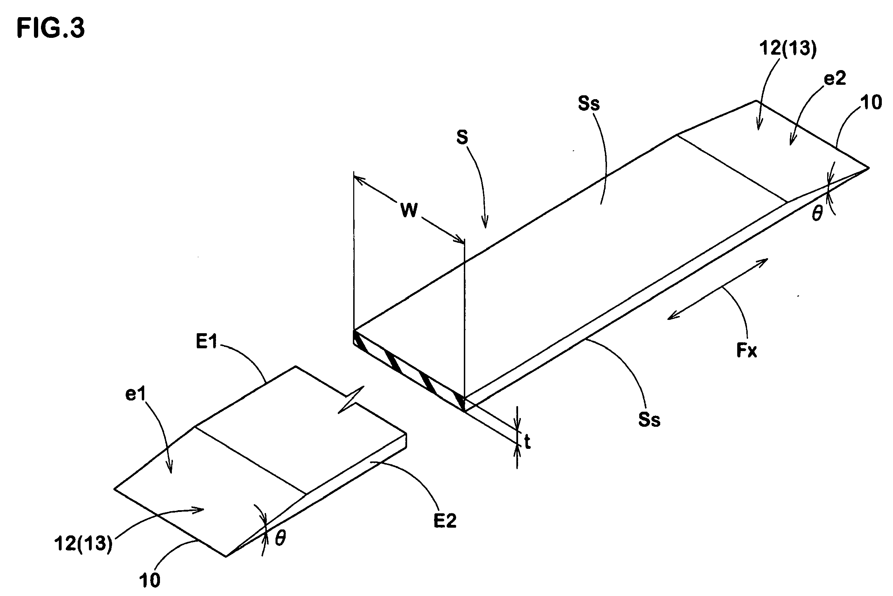

Next, as shown in Figs. 2 and 3, the rubber strip (S) is thin-ribbon-like and has a thickness (t) of not more than 5 mm between the rubber strip surfaces (Ss), for example. Each end surface 12 of the first end portion (e1) and the second end portion (e2) of the rubber strip (S) has a front end edge 10 extending, in plan view, from one side edge (E1) of the rubber strip (S) in the width direction thereof to another side edge (E2) of the rubber strip (S) in the width direction thereof. The end surface 12 of at least one of the end portions (e1) and (e2), which are the respective end surfaces 12 of both the end portions (e1) and (e2) in this embodiment, is formed as an inclined surface 13 inclining with respect to the longitudinal direction line of the rubber strip (S). Therefore, the inclined surface 13 inclines without being a surface perpendi cul ar to the longitudinal di recti on line. This example shows the inclined surface 13 inclines so that the thickness of the rubber strip (S) reduces gradually toward the above-mentioned front end edge 10.

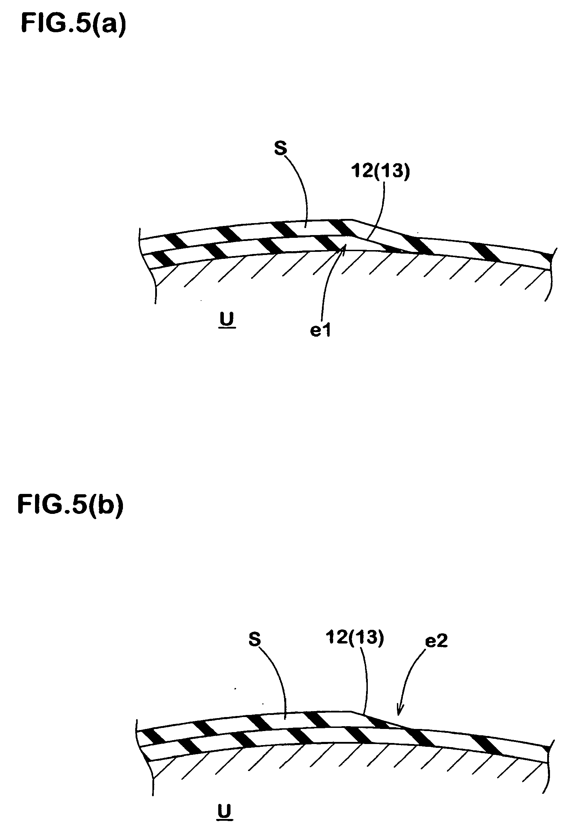

In the inclined surface 13, this eliminates occurrence of a large step at the end portions (e1) and (e2) of the rubber strip (S) of the rubber member (R), as shown in Figs. 5(a) and 5(b), which are cross sectional views respectively corresponding to the lines A-A and B-B in Fig. 4(b).

specifically, as shown i n Fig. 5(a), at the fi rst end porti on (e1), a close contact is secured between a wound portion of the rubber strip (S) superposed onto the end portion (e1) and the inclined surface 13. This makes significantly smooth the variation in the thickness of the rubber member (R) at the fi rst end portion (e1), and prevents occurrence of a large air pocket as observed in the conventional art. Also at the second end portion (e2), the inclined surface 13 makes the variation in the thickness of the rubber member (R) significantly smooth, as shown in Fig. 5(b).

Thus, forming a green tire from the rubber member (R) and vulcanizing the green tire realizes production of a pneumatic tire with superior uniformity. In the pneumatic tire thus produced, a large air pocket scarcely occurs at the end portions (e1) and (e2) of the rubber strip (S). This prevents pneumatic tires from meeting with defective molding and degraded durability that would otherwise be caused by the air pocket.

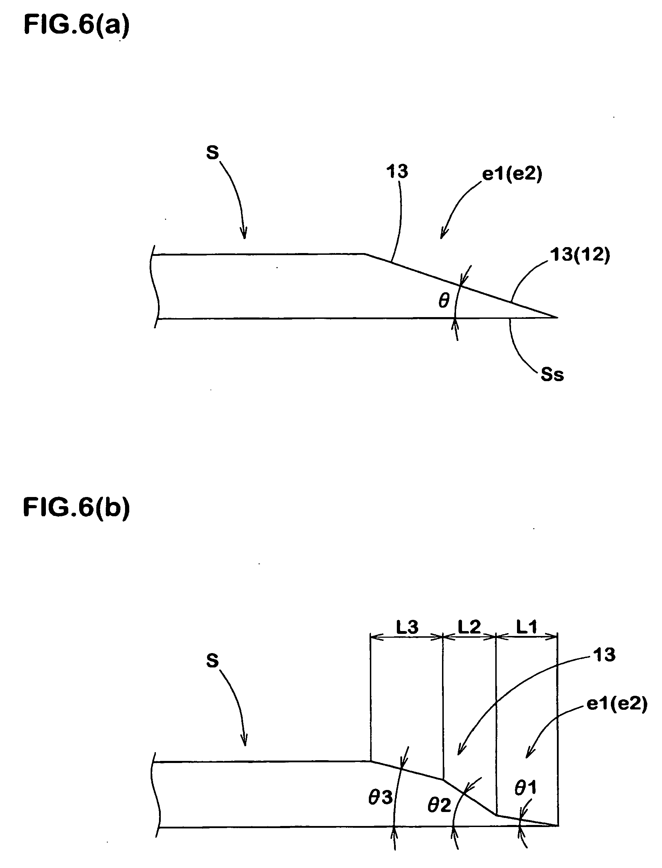

Fig. 6(a) shows a cross sectional view taken on line C-C of Fig. 2. In a section perpendicular to the front end edge 10, an angle of the above-mentioned inclined surface 13 with respect to the surface (Ss) of the rubber strips (S) including the front end edge 10 is set an inclination angle $\theta$. In view of the above advantageous effects, the inclination angle $\theta$ is preferably not more than 80 degrees, more preferably not more than 60 degrees, still more preferably not more than 45 degrees, and most preferably not more than 30 degrees. In view of processability, though, substantially 45 degrees is preferred. In each of the end portions (e1) and (e2), the inclined surface 13 is preferably sharp toward the front end edge 10, where the thickness of the inclined surface 13 becomes zero.

The inclined surface 13 may have a uniform inclination angle $\theta$ as shown in Fig. 6(a), or inclination angles $\theta_1$, $\theta_2$, ..., en (n=3 in this example) as shown in Fig. 6(b). In the latter case, as indicated by the formula below, the average of the different angles weighted according to the corresponding lengths preferably meets the above-specified range. More preferably, all the inclination angles $\theta_1$, $\theta_2$, ..., $\theta_n$ meet the range.

$$\theta = \Sigma(\theta_i \cdot L_i)/\Sigma L_i \qquad (i=1,\ 2,\ \dots n)$$

where $\theta_i$ denotes the inclination angle of the end portions (e1) and (e2) of the rubber strip (S), and Li denotes the length over which the angle $\theta_1$ is secured.

Referring to Fig. 3, the thickness (t) and the width (w) of the rubber strip (S) are not particularly specified. Still, if these are too small, the winding count of the rubber member (S) in making the rubber member (R) increases, resulting in a tendency toward degraded producti vi ty. In order to improve the productivity of the rubber member (R) and eventually the productivity of the pneumatic tire 1, the lower limit of the thickness (t) of the rubber strip (S) is preferably not less than 0.2 mm, more preferably not less than 0.3 mm. Similarly, the lower limit of the width (w) of the rubber strip (S) is preferably not less than 3 mm, more preferably not less than 5 mm.

On the other hand, making the thickness (t) and the width (w) of the rubber strip (S) excessively large tends to degrade the workability of winding the rubber strip (S) onto the cylindrical object (u) and to make it difficult to form a desired cross section accurately. In vi ew of this, the upper limit of the thickness (t) of the rubber strip (S) is preferably not more than 5 mm, more preferably not more than 4 mm. Similarly, the upper limit of the width (w) of the rubber strip (S) is preferably not more than 50 mm, more preferably not more than 40 mm.

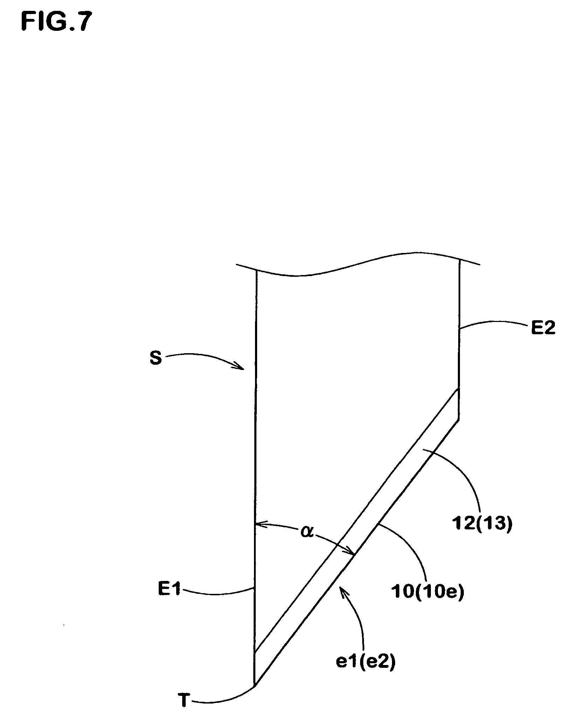

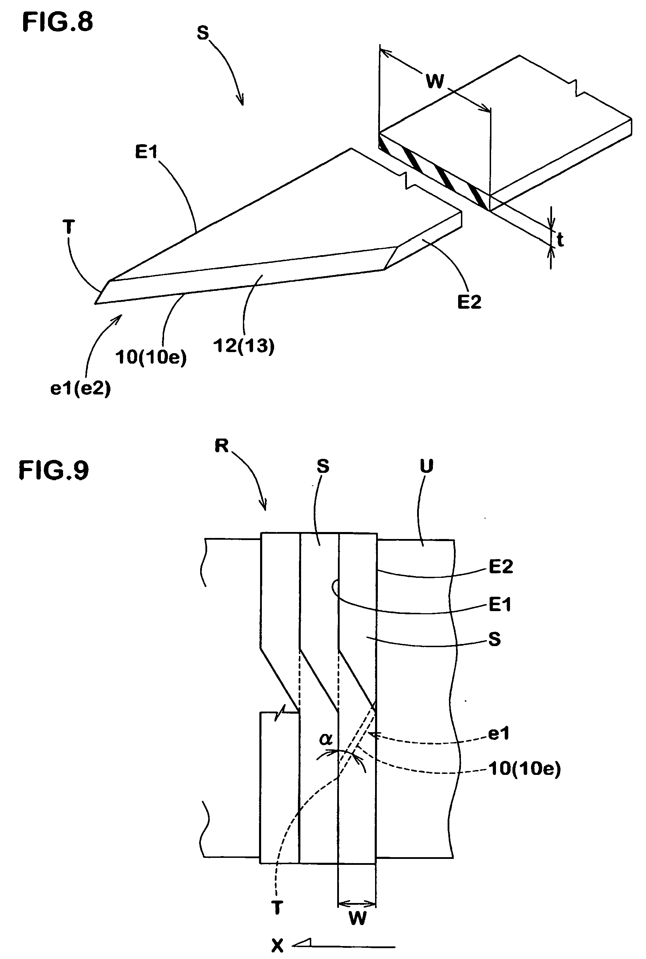

when the surface 13 is an inclined surface 13 where a thickness vari es, the front end edge 10 of the inclined surface 13 may be di sposed, in pl an vi ew, perpendicularly to the longitudinal di recti on line as shown in Figs. 2 and 3. However, as shown in Figs. 7 and 8, the front end edge 10 is preferably an inclined end edge 10e inclined, in plan view, at an angle $\alpha$ of 10 to 80 degrees relative to the one side edge (E1).

As shown in Fig. 9, in the case of the rubber strip (S) with the inclined end edge 10e, when the end portion (e1) is covered with a succeedi ng wound portion of the rubber strip (S), the end surface 12 extends along the end edge 10e while being inclined rel ati ve to the axial direction of the tire. This further distributes the variation in mass in the circumferential direction of the tire, thereby minimizing imbalance of mass. This further improves tire uniformity. Although not illustrated, similar advantageous effects are obtained at the second end portion (e2) of the rubber strip (S).

As shown in Fig. 9, in the case of the rubber strip (s) wi th the inclined end edge 10e, in a first wound portion of the rubber strip (S), the first end portion (e1) is preferably arranged so that the other side edge (E2) is positioned at a side edge of the rubber member (R) in the width direction thereof. Then, the rubber strip (S) is spirally wound in the direction x from the other side edge (E2) to the one side edge (E1). That is, the rubber strip (S) is wound while being displaced from the other side edge (E2) to the one side edge (E1). Then, at least a part of the inclined end edge 10e is covered with a succeeding wound portion of the rubber strip (S). The contact of the end portion (e1) with the succeeding wound portion of the rubber strip (S) starts from a tip (T) of the inclined end edge 10e. This makes the air between radially overlapping portions of the rubber strip (S) easy to be di scharged outsi de the rubber member (R) along the inclined end edge 10e, thereby further reliably preventing occurrence of an air pocket.

If the angle $\alpha$ of the inclined end edge 10e is less than 10 degrees, the rigidity of the tip (T) of the rubber strip (S) is degraded to make the end portion (e1) or (e2) unstable in shape and difficult to handle. If, on the other hand, the

angle $\alpha$ of the inclined end edge 10e exceeds 80 degrees, the effect of circumferentially distributing the variation in mass is degraded, which leads to degradation of the effect of discharging air. In view of this, the lower limit of the angle $\alpha$ is more preferably not less than 25 degrees, further more preferably not less than 30 degrees. The upper limit is preferably not more than 75 degrees, more preferably not more than 60 degrees.

As shown in Fig. 9, the rubber strip (S) is wound, starting from the first end portion (e1), substantially parallel to the circumferential direction of the cylindrical object (U). After substantially covering the inclined end edge 10e, the succeeding wound portion of the rubber strip (s) is locally bent in the x direction by a distance approximately equal to the width of the rubber strip (s). Hereinafter description will be made of the example where the rubber strip (S) is wound while making the side edges (E1) and (E2) in contact with one another. In this specification, this embodiment of winding the rubber strip (S) is encompassed by the embodiments of "spirally" winding the rubber strip (S).

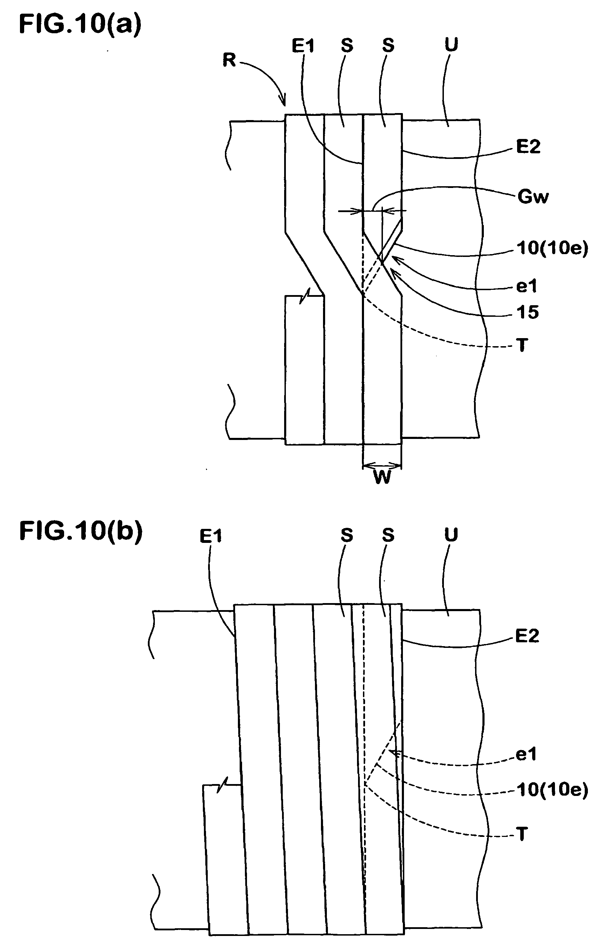

Figs. 10(a) and 10(b) show other embodiments of winding the rubber strip (S). While the embodiment shown in Fig. 10(a) is based on the Fig. 9 embodiment, only a part of the inclined end edge 10e is covered with the succeeding wound portion of the rubber strip (S). If a width (Gw) over which the inclined end edge 10e is covered with the succeeding wound portion is too small, a v-shaped depression 15 is formed on the side edge of the rubber member (R), which causes damage and an air pocket. In vi ew of this, the covering ratio (Gw/w), which is obtained by dividing the covering width (Gw) of the inclined end edge 10e by the width (w) of the rubber strip (s), is preferably not less than 20%, more preferably not less than 30%.

In the embodi ment shown in Fig. 10(b), the fi rst wound porti on of the rubber strip (S) is wound in excess of one cycle of winding so that the inclined end edge 10e of the end porti on (e1) is completely covered, and then the succeeding wound portion of the rubber strip (S) is smoothly wound in a spiral manner.

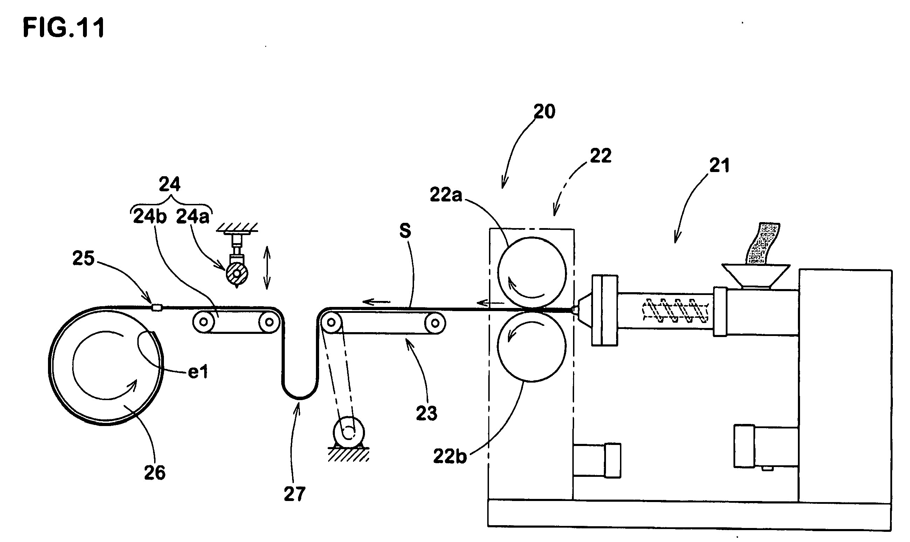

Next, the rubber strip (S) can be produced by vari ous methods. For example, Fig. 11 shows a production apparatus 20 of the rubber strip (S).

The production apparatus 20 includes:

a rubber extruder 21 for kneading rubber materials and continuously extruding the rubber materials in the form of a ribbon;
a calendar roll 22 disposed at a downstream side of the rubber extruder 21 and having a pair of rolls 22a and 22b capable of pressing and molding the rubber extruded from the rubber extruder 21 to have a finished cross sectional shape of the rubber strip (S);
a driving conveyer 23 for conveying the rubber strip (S) molded at the calendar roll 22; and
a cutting apparatus 24 disposed at a downstream side of the driving conveyer 23 and capable of cutting the rubber strip (S).

At a downstream side of the cutting apparatus 24, an appl i cator 25 for guiding the rubber strip (S) and a molding drum 26 onto which the rubber strip (S) is wound are disposed. The applicator 25 is axially movable relative to the molding drum 26 by a moving mechanism, not shown. This enabl es the rubber strip (S) to be guided to a predetermined wi ndi ng position on the molding drum 26. Preferably, an accumulator 27 is disposed where needed between the driving conveyer 23 and the cutting apparatus 24.

The cutting apparatus 24 has a cutting device 24a disposed above the rubber strip (S) and movable upward and downward, and a conveyer 24b disposed under the rubber strip (S) and for receiving the cutting device 24a when lifted downward.

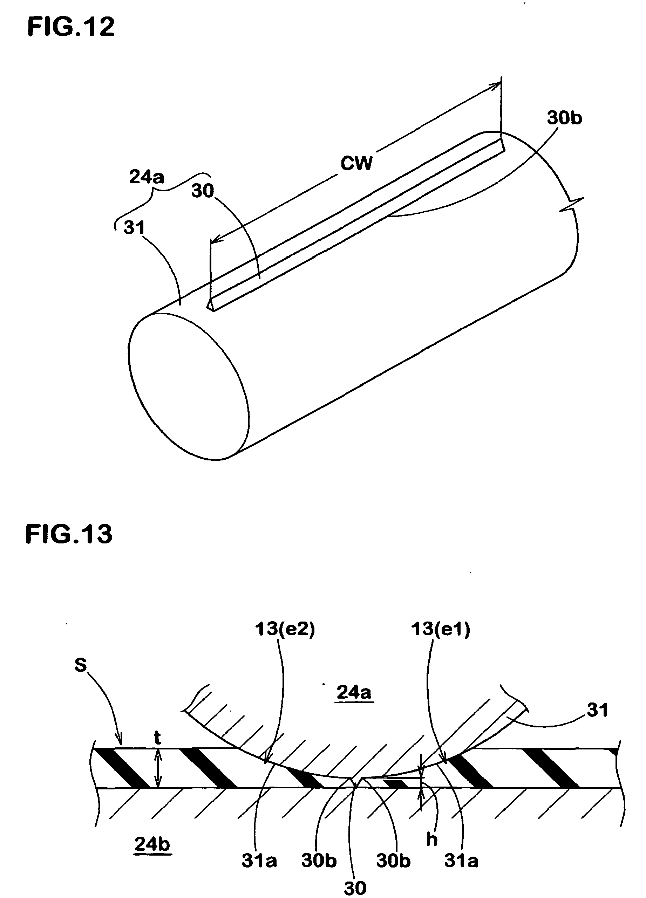

As shown in Figs. 12 and 13, the cutti ng devi ce 24a i s composed of a sharp cutting edge 30 extending in the width di recti on of the rubber strip (S) and an substantially circular column-shaped pressing portion 31 extending parallel to the cutting edge 30. It should be noted that while Fig. 12 shows the cutting edge 30 pointing upward for a better view thereof, the cutting edge 30 is disposed pointing downward in practice, as shown in Fig. 11.

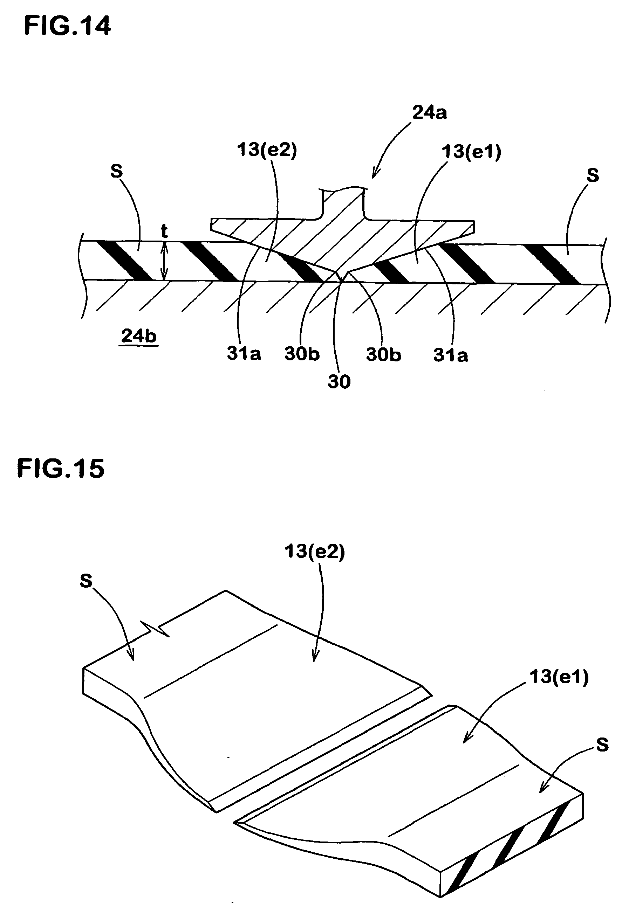

In this example, the cutting edge 30 has a width (CW) that is larger than the length for cutting the rubber strip (S) while having a height (h) that is smaller than a thickness (t) of the rubber strip (S), as shown in Fig. 13. The pressing portion 31 has a pressing face 31a extending and inclined upward in longitudinal di recti on of the rubber strip (S) from a root portion 30b of the cutting edge 30. while for the inventive embodiment the pressing face 31a has an arc face, possible other examples include straight slopes as shown in Fig. 14.

Pressing the cutting device 24a downward starts cutting of the rubber strip (S) with the cutting edge 30 fi rst cutting into the surface of the rubber strip (S). Pressing the cutting device 24a farther downward completely cuts the rubber strip (S). Here the height (h) of the cutting edge 30 is smaller than the thickness (t) of the rubber strip (S). Thus, in the completely cut state, the pressing face 21a presses the end portions (e1) and (e2) of the rubber strip (S) each into a tapering shape, and the above-mentioned end surface 12 is formed as the inclined surface 13. That is, the cutting device 24a is capable of cutting the rubber strip (S) while at the same time processing the end portions (e1) and (e2) each into a tapering shape, thereby improving productivity.

Fig. 15 shows the end portions (e1) and (e2) of the rubber strip (S) cut by the cutting device 24a. The end portions (e1) and (e2) of the rubber strip (S) are made slightly wider by being pressed into a tapering shape by the pressing face 31a. The increased portion of the width of the end portions (e1) and (e2) causes no adverse influence on performance of the tire because the thickness is negligibly small and the size is not large. When the rubber strip (S) is to have an inclined end edge 10e for its front end edge 10 (as shown in Figs. 7 and 8), the cutting device 24a may be disposed to have its axis (or cutting edge 30) inclined at an angle of θ relative to the longitudinal direction line of the rubber strip (S).

Cutting of the rubber strip (S) may be carried out while the conveyer 24b is suspended. Here the rubber strip (S) continuously supplied via the driving conveyer 23 is accumulated at the accumulator 27. Alternatively, the rubber strip (S) may be cut without suspending the conveyer 24b in order to improve productivity.

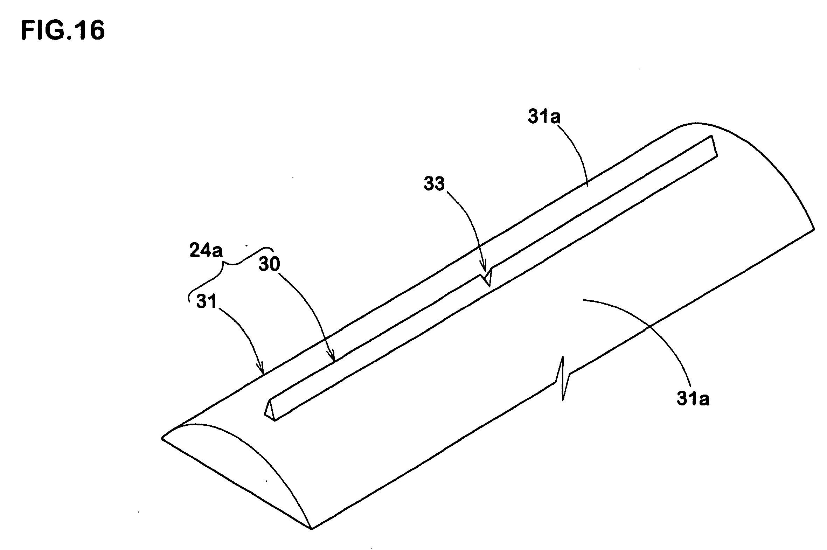

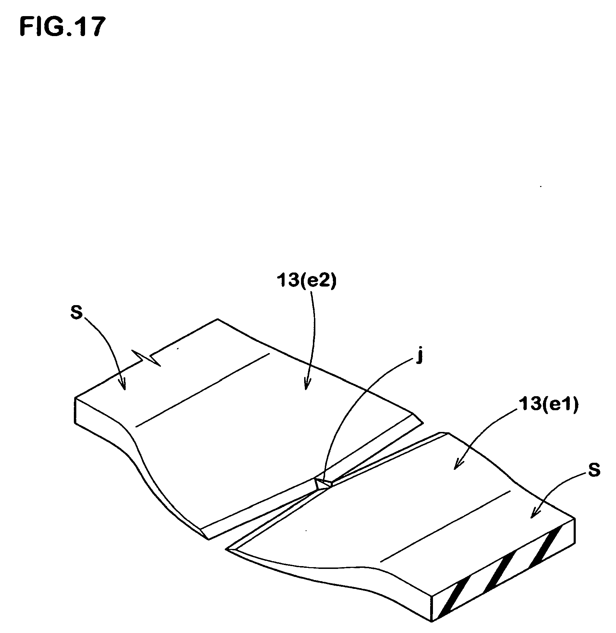

It is possible that the rubber strip (S) be easily cut by a slight cut on the surface of the rubber strip (S) by the cutting edge 30 when, for example, there is a relatively large degree of tension on the rubber strip (S). This precludes sufficient pressing of the rubber strip (S) by the pressing face 21a for accurate formation of the inclined surface 13. In this case, the cutting edge 30 is preferably provided with, somewhere on part thereof, at least one notch 33 that gives an intermission to the continuity of the cutting edge 30, as shown in Fig. 16. The notch 33 reduces the length for cutting the rubber strip (S) and thereby prevents immature cutting thereof in situations such as where there is tension on the rubber strip (S). This results in, for example, a rubber strip (S) having the end portions (e1) and (e2) connected with one another by a joint (j), as shown in Fig. 17. The joint (j) can be easily cut by manual pulling of an operator.

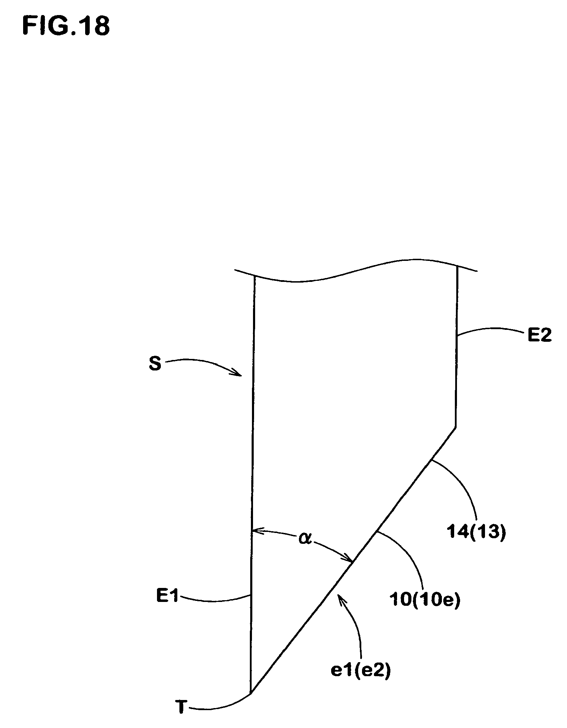

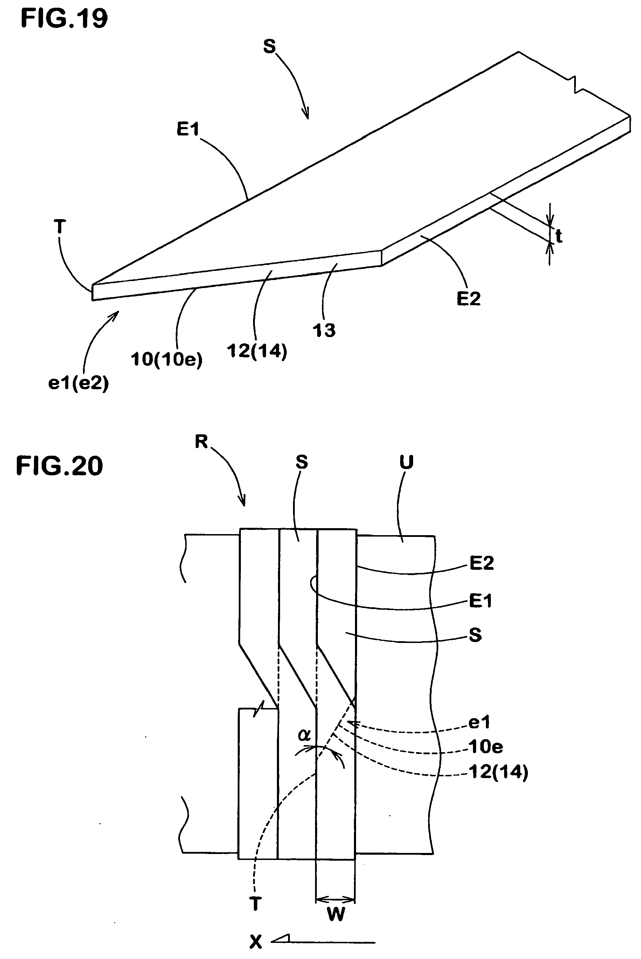

Figs 18 and 19 shows another embodiment of the rubber strip (S). In this rubber strip (S), at least one of the first end portion (e1) and the second end portion (e2), namely the each front end edges 10 of both the end portions (e1) and (e2) in the example, is an inclined end edge 10e inclining, in plan view, at an angle α of 10 to 80 degrees with respect to the above-mentioned one side edge (E1). The end surface 12 (the inclined surface 13) of each of the end portions (e1) and (e2) is formed as a perpendicular surface 14 which inclines with respect to the width direction and perpendicular to the thickness direction.

As shown in Fig. 20, in the case of such a rubber strip (S), in a first wound portion of the rubber strip (s), the first end portion (e1) is arranged so that the other side edge (E2) is positioned at a side edge of the rubber member (R) in the width direction thereof. Then, the rubber strip (S) is spirally wound in the x direction from the other si de edge (E2) to the one side edge (E1), and at least a part of the inclined end edge 10e is covered with a succeeding wound portion of the rubber strip (S). Also in this case, even though the inclined surface 13 is constituted by the perpendicular face 14 but inclining with respect to the width direction, the air between overlapping portions of the rubber strip (S) is easy to be discharged outside the rubber member (R) along the inclined end edge 10e. As a result, thereby preventing occurrence of an air pocket. Further, since the front end edge 10 is constituted by the inclined end edge 10e, the vari ati on in mass is circumferentially distributed, thereby improving uniformity.

while description has been made of the embodiments of the present invention, the illustrated embodiments should not be construed as to limit the scope of the present invention; various modifications are possible without departing from the scope of the present invention.

<Test 1>

Tread rubbers were formed by spirally winding rubber strips specified in Table 1. The tread rubbe rs were used to produce 10000 pneumatic tires for passenger cars for each of the specifications in Table 1. The si ze of the ti res was 215/45ZR17. The ti res were tested for uniformity, di sfi gurati on caused by ai r pocketing, and producti vi ty. The test methods are as follows.

<Disfiguration>

The surface of the tread rubber after vulcanization was visually inspected for damage on the surface mainly caused by the second end portion of the rubber strip and for swelling mainly caused by internal air pocketing. The recorded resul ts are represented by the number of occurrences of damage and swelling. A smaller value indicates a more preferably result.

<Uniformity>

Radial Force variation (RFV) was measured for each test tire according to uniformity test conditions specified in JASO C607: 2000. For RFV, an overall at a low speed rotation (10 km/h) was used. A smaller RFV value indicates superior uniformity.

<Productivity>

The time required for forming the rubber member for the tread rubber was measured. A result is represented by an index on the basis that comparative Example (A1) is 100. A larger value indicates a shorter period of time. The test results are shown in Table 1.
[Table 1]

## Table 1

| | Comparative Example A1 | Comparative Example A2 | Example A1 | Example A2 | Example A3 | Example A4 | Example A5 |
|---|---|---|---|---|---|---|---|
| Thickness (t) of rubber strip [mm] | 1.0 | 2.0 | 1.0 | 2.0 | 1.0 | 2.0 | 1.0 |
| Width (w) of rubber strip [mm] | 10 | 10 | 10 | 10 | 10 | 10 | 10 |
| Angle $\alpha$ of front end edge [degrees] | 90 | 90 | 90 | 90 | 90 | 90 | 90 |
| Inclination angle $\theta$ of end surface [degrees] | 90 | 90 | 75 | 75 | 40 | 40 | 25 |
| Disfiguration (damage and swelling) [number] | 10 | 20 | 6 | 11 | 2 | 3 | 0 |
| Uniformity (RFV) [N] | 60 | 75 | 55 | 67 | 45 | 52 | 40 |
| Productivity [index] | 100 | 120 | 100 | 120 | 100 | 120 | 100 |

| | Example A6 | Example A7 | Example A8 | Example A9 | Example A10 | Example A11 | Example A12 |
|---|---|---|---|---|---|---|---|
| Thickness (t) of rubber strip [mm] | 2.0 | 1.5 | 2.5 | 2.0 | 2.0 | 2.0 | 3.0 |
| Width (w) of rubber strip [mm] | 10 | 10 | 10 | 5 | 15 | 40 | 10 |
| Angle $\alpha$ of front end edge [degrees] | 90 | 90 | 90 | 90 | 90 | 90 | 90 |
| Inclination angle $\theta$ of end surface [degrees] | 25 | 75 | 75 | 75 | 75 | 75 | 75 |
| Disfiguration (damage and swelling) [number] | 1 | 7 | 13 | 7 | 15 | 18 | 17 |
| Uniformity (RFV) [N] | 45 | 59 | 69 | 58 | 70 | 71 | 70 |
| Productivity (index) | 120 | 110 | 120 | 95 | 120 | 120 | 120 |

The test results confirmed that the tires according to Examples had superior uniformity and appearance performance to those of comparative Examples.

<Test 2>

Clinch rubbers were formed by winding rubber strips specified in Table 2 in the manners shown in Figs. 9 and 20. The clinch rubbers were used to produce 100 pneumatic tires for passenger cars for each of the specifications in Table 2. The size of the tires was 215/45ZR17. The tires are the same in other respects; the rubber strip was in the form of a ribbon of 10 mm wide and 1.0 mm thick. The tires were tested for uniformity and disfiguration caused by air pocketing. The test methods are as follows.

<Disfiguration>

The surface of the clinch rubber after vulcanization was visually inspected for damage on the surface mainly caused by the second end porti on of the rubber strip and for swelling mainly caused by internal air pocketing. The recorded resul ts are represented by the number of occurrences of damage and swelling. A smaller value indicates a more preferably result.

<Uniformity>

Radial Force variation RFV was measured for each test tire according to uniformity test conditions specified in JASO C607: 2000. For RFV, an overall at a low speed rotation (6.8 km/h) was used. A smaller RFV value indicates superior uniformity.
Table 2

Table 2

| | Comparative Example B1 | Comparative Example B2 | Example B1 | Example B2 | Example B3 | Example B4 | Example B5 | Example B6 | Example B7 | Example B8 | Comparative Example B3 |
|---|---|---|---|---|---|---|---|---|---|---|---|
| Angle α of front end edge [degrees] | 90 | 90 | 90 | 85 | 80 | 75 | 60 | 45 | 30 | 15 | 90 |
| Inclination angle θ of end surface [degrees] | 90 | 90 | 45 | 90 | 90 | 90 | 90 | 90 | 90 | 90 | 90 |
| Covering ratio (Gw/W) of inclined end edge [%] | 100 | 50 | 50 | 50 | 50 | 50 | 50 | 50 | 50 | 50 | 0 |
| Disfiguration (damage) [number] | 0 | 0 | 0 | 0 | 0 | 0 | 0 | 0 | 0 | 0 | 7 |
| Disfiguration (swelling) [number] | 9 | 6 | 4 | 4 | 1 | 1 | 0 | 0 | 0 | 0 | 0 |
| Uniformity (RFV) [N] | 78 | 85 | 77 | 76 | 70 | 67 | 60 | 56 | 58 | 61 | 76 |

| | Example B9 | Example B10 | Example B11 | Example B12 | Example B13 | Example B14 | Example B15 | Example B16 |
|---|---|---|---|---|---|---|---|---|
| Angle α of front end edge [degrees] | 45 | 45 | 45 | 45 | 45 | 45 | 45 | 45 |
| Inclination angle θ of end surface [degrees] | 20 | 45 | 60 | 45 | 45 | 45 | 45 | 45 |
| Covering ratio (Gw/W) of inclined end edge [%] | 50 | 50 | 50 | 100 | 80 | 30 | 20 | 10 |
| Disfiguration (damage) [number] | 0 | 0 | 0 | 0 | 0 | 0 | 2 | 4 |
| Disfiguration (swelling) [number] | 0 | 0 | 0 | 0 | 0 | 2 | 3 | 6 |
| Uniformity (RFV) [N] | 50 | 53 | 55 | 50 | 51 | 55 | 57 | 60 |

The test results confirmed that the tires according to Examples had superior uniformity and appearance performance to those of Comparative Examples.

Claims

1. A method for producing a rubber member for ti res, by spirally winding an unvulcanized rubber strip (S), comprising the steps of:

attaching the first longitudinal end portion (e1) of the rubber strip (s) to an substantially cylindrical object (U); spirally winding the rubber strip (S) onto the cylindrical object (U); and attaching a second longitudinal end portion (e2) of the rubber strip (S) to a wound assembly of the rubber strip (S) formed in said winding step, wherein the each end surface (12) of the first end portion (e1) and the second end portion (e2) has a front end edge (10) extending, in plan view, from one side edge (E1) to another side edge (E2) of the rubber strip (S) in the width direction thereof; the end surface (12) of at least one of said first end portion (e1) and the second end portion (e2) is an inclined surface (13) inclining to the longitudinal di recti on line of the rubber strip (S) ;

said inclined surface (13) is inclined to reduce thickness of the rubber strip (S) gradually toward the front end edge (10); and

the inclination angle $\theta$ of said inclined surface (13), in a cross section perpendicular to said front end edge (10), is in a range of 10 to 80 degrees with respect to the surface of the rubber strip (S) including said front end edge (10), the method further comprising the step of pressing a cutting device (24a) against the rubber strip (s) to cut the rubber strip (S) and to form said inclined surface (13) on each end of cut portions of the rubber strip (S), the cutting device (24a) having a cutting edge (30) extending in the width direction of the rubber strip (S) and a pressing portion (31) having a pressing face (31a) extending and inclined upward in the longitudinal direction of the rubber strip (s) from a root portion (30b) of the cutting edge (30); wherein

the rubber strip (s) is cut on the cutting edge (30) by pressing the cutting device (24a) against the rubber strip (S) while the pressing face (31a) of the pressing portion (31) presses the ends of the cut portions of the rubber strip (S) to form the inclined surface (13) on each of the ends,

**characterized in that**

the pressing portion (31) constitutes a part of a circular column having an axis extending parallel to the cutting edge (30).

2. The method for producing a rubber member for tires according to claim 1, wherein said front end edge (10) of said inclined surface (13) inclines with respect to the longitudinal direction line, in plan view, at an inclination angle $\alpha$ of said front end is in a range of 10 to 80 degrees with respect to said one side edge (E1, D2).

3. The method for producing a rubber member for tires according to claim 2, wherein:

said first end portion (e1) in the first wound portion of the rubber strip (s) is arranged so that said other side edge of the rubber strip (S) is positioned at an outer side edge of the rubber member in the width direction of the rubber member; and

at least a part of the inclined end edge of said first end portion (e1) is covered with a succeeding wound portion of the rubber strip (S) when the rubber strip (S) is wound while being displaced in a direction from said other side edge to said one side edge.

4. A method for producing a tire comprising the steps of:

molding a green tire by using the rubber member for tires produced by the method set forth in claims 1 to 3; and vulcanizing the green tire.

**Patentansprüche**

1. Verfahren zum Herstellen eines Kautschukelements für Reifen durch spiralförmiges Wickeln eines unvulkanisierten Kautschukstreifens (S), mit den Schritten, dass:

der erste Längsendabschnitt (e1) des Kautschukstreifens (S) an einem im Wesentlichen zylindrischen Objekt (U) angebracht wird;

der Kautschukstreifen (S) spiralförmig auf das zylindrische Objekt (U) gewickelt wird; und

ein zweiter Längsendabschnitt (e2) des Kautschukstreifens (S) an einer gewickelten Anordnung des Kautschukstreifens (S), die bei dem Wickelschritt gebildet wird, angebracht wird, wobei

eine jede Endoberfläche (12) des ersten Endabschnitts (e1) und des zweiten Endabschnitts (e2) eine vordere Endkante (10) aufweist, die sich in einer Draufsicht von einer Seitenkante (E1) zu einer anderen Seitenkante (E2) des Kautschukstreifens (S) in dessen Breitenrichtung erstreckt;

die Endoberfläche (12) von zumindest einem von dem ersten Endabschnitt (e1) und dem zweiten Endabschnitt (e2) eine geneigte Oberfläche (13) ist, die sich zu der Längsrichtungslinie des Kautschukstreifens (S) neigt;

die geneigte Oberfläche (13) geneigt ist, um die Dicke des Kautschukstreifens (S) allmählich zu der vorderen Endkante (10) hin zu verringern; und

der Neigungswinkel $\theta$ der geneigten Oberfläche (13) in einem Querschnitt senkrecht zu der vorderen Endkante (10) in einem Bereich von 10 bis 80 Grad mit Bezug auf die Oberfläche des Kautschukstreifens (S), die die vordere Endkante (10) umfasst, liegt,

wobei das Verfahren ferner den Schritt umfasst, dass eine Schneideinrichtung (24a) gegen den Kautschukstreifen (S) gepresst wird, um den Kautschukstreifen (S) zu schneiden und somit die geneigte Oberfläche (13) an jedem Ende von geschnittenen Abschnitten des Kautschukstreifens (S) zu bilden,

die Schneideinrichtung (24a) eine Schneidkante (30), die sich in der Breitenrichtung des Kautschukstreifens (S) erstreckt, und

einen Pressabschnitt (31) aufweist, der eine Pressfläche (31 a) aufweist, die sich in der Längsrichtung des Kautschukstreifens (S) von einem Hauptabschnitt (30b) der Schneidkante (30) erstreckt und nach oben geneigt ist; wobei

der Kautschukstreifen (S) an der Schneidkante (30) geschnitten wird, indem die Schneideinrichtung (24a) gegen den Kautschukstreifen (S) gepresst wird, während die Pressfläche (31a) des Pressabschnitts (31) die Enden der geschnittenen Abschnitte des Kautschukstreifens (S) presst, um die geneigte Oberfläche (13) an jedem der Enden zu bilden,

**dadurch gekennzeichnet, dass**

der Pressabschnitt (31) einen Teil einer kreisförmigen Säule bildet, die eine Achse aufweist, die sich parallel zu der Schneidkante (30) erstreckt.

2. Verfahren zum Herstellen eines Kautschukelements für Reifen nach Anspruch 1, wobei die vordere Endkante (10) der geneigten Oberfläche (13) sich mit Bezug auf die Längsrichtungslinie in einer Draufsicht unter einem Neigungswinkel $\alpha$ von dem vorderen Ende neigt, der in einem Bereich von 10 bis 80 Grad mit Bezug auf die eine Seitenkante (E1, D2) liegt.

3. Verfahren zum Herstellen eines Kautschukelements für Reifen nach Anspruch 2, wobei:

der erste Endabschnitt (e1) in dem ersten gewickelten Abschnitt des Kautschukstreifens (S) derart eingerichtet ist, dass die andere Seitenkante des Kautschukstreifens (S) an einer äußeren Seitenkante des Kautschukelements in der Breitenrichtung des Kautschukelements angeordnet ist; und

zumindest ein Teil der geneigten Endkante des ersten Endabschnitts (e1) mit einem nachfolgenden gewickelten Abschnitt des Kautschukstreifens (S) bedeckt wird, wenn der Kautschukstreifen (S) gewickelt wird, während er in einer Richtung von der anderen Seitenkante zu der einen Seitenkante verschoben wird.

4. Verfahren zum Herstellen eines Reifens mit den Schritten, dass:

ein Rohreifen unter Verwendung des Kautschukelements für Reifen, das durch das in den Ansprüchen 1 bis 3 dargelegte Verfahren hergestellt wird, geformt wird; und

der Rohreifen vulkanisiert wird.

## Revendications

1. Procédé pour produire un élément caoutchouc pour pneumatique, en enroulant en spirale un ruban de caoutchouc non vulcanisé (S), comprenant les étapes consistant à :

attacher la première portion d'extrémité longitudinale (e1) du ruban de caoutchouc (S) à un objet est sensiblement cylindrique (U) ;

enrouler en spirale le ruban de caoutchouc (S) sur l'objet cylindrique (U) ; et

attacher une seconde portion d'extrémité longitudinale (e2) du ruban de caoutchouc (S) sur un ensemble bobiné du ruban de caoutchouc (S) formé dans ladite étape d'enroulement, dans lequel

chaque surface d'extrémité (12) de la première portion d'extrémité (e1) et de la seconde portion d'extrémité (e2) a une bordure d'extrémité frontale (10) s'étendant, dans une vue en plan, depuis une bordure latérale (E1) jusqu'à une autre bordure latérale (E2) du ruban de caoutchouc (S) dans la direction en largeur de celui-ci ;

la surface d'extrémité (12) de l'une au moins de ladite première portion d'extrémité (e1) et de la seconde portion d'extrémité (e2) est une surface inclinée (13) qui s'incline vers la ligne de direction longitudinale du ruban de caoutchouc (S) ;

ladite surface inclinée (13) est inclinée pour réduire l'épaisseur du ruban de caoutchouc (S) graduellement vers la bordure d'extrémité frontale (10) ; et

l'angle d'inclinaison $\theta$ de ladite surface inclinée (13), dans une section transversale perpendiculaire à ladite bordure d'extrémité frontale (10),

est dans une plage de 10 à 80 degrés par rapport à la surface du ruban de caoutchouc (S) incluant ladite bordure d'extrémité frontale (10),

le procédé comprenant en outre l'étape consistant à presser un dispositif de coupe (24a) contre le ruban de caoutchouc (S) pour couper le ruban de caoutchouc (S) et pour former ladite surface inclinée (13) sur chaque extrémité des portions découpées du ruban de caoutchouc (S),

le dispositif de coupe (24a) ayant un bord de coupe (30) s'étendant dans la direction en largeur du ruban de caoutchouc (S), et

une portion de pressage (31) ayant une face de pressage (31a) s'étendant et inclinée vers le haut dans la direction longitudinale du ruban de caoutchouc (S) depuis une portion de racine (30b) du bord de coupe (30) ; dans lequel

le ruban de caoutchouc (S) est couplé sur le bord de coupe (30) en pressant le dispositif de coupe (24a) contre le ruban de caoutchouc (S) alors que la face de pressage (31a) de la portion de pressage (31) presse les extrémités des portions découpées du ruban de caoutchouc (S) pour former la surface inclinée (13) sur chacune des extrémités,

**caractérisé en ce que**

la portion de pressage (31) constitue une partie d'une colonne circulaire ayant un axe s'étendant parallèlement au bord de coupe (90).

2. Procédé pour produire un élément caoutchouc pour des pneumatiques selon la revendication 1, dans lequel ladite bordure d'extrémité avant (10) de ladite surface inclinée (13) s'incline par rapport à la ligne de direction longitudinale, dans une vue en plan, sous un angle d'inclinaison $\alpha$ de ladite extrémité frontale qui est dans une plage de 10 à 80° par rapport audit bord latéral (E1, D2).

3. Procédé pour produire un élément en caoutchouc pour pneumatique selon la revendication 2, dans lequel :

ladite première portion d'extrémité (e1) dans la première portion enroulée du ruban de caoutchouc (S) est agencée de telle façon que ladite autre bordure latérale du ruban de caoutchouc (S) est positionnée à une bordure latérale extérieure de l'élément en caoutchouc dans la direction en largeur de l'élément en caoutchouc ; et

au moins une partie de la bordure d'extrémité inclinée de ladite première portion d'extrémité (e1) est couverte avec une portion enroulée successive du ruban de caoutchouc (S) quand le ruban de caoutchouc (S) est enroulé tout en étant déplacé dans une direction depuis ladite autre bordure latérale vers ladite première bordure latérale.

4. Procédé pour produire un pneumatique comprenant les étapes consistant à :

mouler un pneumatique cru en utilisant l'élément en caoutchouc pour pneumatique produit par le procédé selon les revendications 1 à 3 ; et vulcaniser le pneumatique cru.

# FIG.1

**FIG.2**

# FIG.3

EP 2 151 314 B1

FIG.4(a)

FIG.4(b)

# FIG.5(a)

S

12(13)

U

e1

# FIG.5(b)

S    12(13)    e2

U

**FIG.6(a)**

**FIG.6(b)**

# FIG.7

**FIG.8**

**FIG.9**

**FIG.10(a)**

**FIG.10(b)**

# FIG.11

EP 2 151 314 B1

## FIG.12

## FIG.13

## FIG.14

## FIG.15

FIG.16

# FIG.17

S

13(e2)

j

13(e1)

S

# FIG.18

**FIG.19**

**FIG.20**

**FIG.21**

EP 2 151 314 B1

**FIG.22(a)**

**FIG.22(b)**

## FIG.23

**REFERENCES CITED IN THE DESCRIPTION**

**Patent documents cited in the description**

- JP 2006051711 A
- JP S56117637 A
- JP H0825510 A

- EP 0561609 A1
- JP 11291364 A
- JP 2003251709 A